# EUROPEAN PATENT APPLICATION

(11) **EP 4 039 766 A1**
(43) Date of publication of application: **10.08.2022**
(21) Application number: 20870533.5
(22) Date of filing: 02.10.2020
(51) Int. Cl.: C09K 3/14, B24D 3/00, C01B 32/28

(54) **EASILY CRUSHABLE DIAMOND ABRASIVE GRAINS AND METHOD FOR MANUFACTURING SAME**

(30) Priority: 04.10.2019 JP 2019183852
(71) Applicant: Tomei Diamond Co., Ltd., Tokyo 105-0004 (JP)
(72) Inventor: ISHIZUKA Yoshiaki, Oyama-city, Tochigi 3230807 (JP)
(74) Representative: Mannucci, Michele
(86) International application number: PCT/JP2020/037635
(87) International publication number: WO 2021/066172

(57) **Abstract**

[Technical Problem]

To provide diamond grits with enhanced friability, and method for the production comprising in combination internal microcracks within the diamond particle and surface irregularities, with or without a layer of non-diamond carbon covering the particle surface.

[Solution to Problem]

The diamond grits of the invention consist of diamond particles synthesized by a static ultrahigh pressure-high temperature process, comprising both microcracks generated within the particles due to the effect of heating, and surface irregularities formed on the particles by oxidizing etching at elevated temperatures.

The production method comprises providing a starting volume of diamond particles, from a synthesizing process in a static ultrahigh pressure-high temperature process, subjecting said diamond particles to a heating process in intimate contact with an oxidizing etchant at a temperature of 800° C or higher, generating thus microcracks within the diamond particles and also causing to corrode the particle surface thus forming increased surface irregularities, and recovering the treated diamond particles.

## Description

### Technical Field

The present invention relates to diamond grits and, in particular, such particles having unique crystal structure specifically designed for achieving good fracturing performance when used for machining applications, in combination with other fundamental qualities.

### Background Art

Diamond synthesis technology has already attained to the level of perfection, such that gem quality diamond crystals are available as abrasive grits for industrial applications. On the other hand needs are also high in grind and polish working sectors for abrasive grits specializing in high-speed precision machining such that higher precision surface finish can be achieved at higher stock removal rates, with an efficient stock removal rates, rather than traditional high toughness diamond grits that allow longer tool lives.

As such grits, which can meet the above criteria of high stock removal rate and fine worked surface quality both at the same time, polycrystalline type abrasive particles are favored in machining industries such that primary particles with a size on the order of 10 nm are firmly agglomerated to form secondary particles of a size of several microns.

However such polycrystalline type grits are produced by the method that employs a lot of explosive with many legal restrictions involved, so the products are rather expensive relative to common grits from static ultrahigh pressure temperature processes. Also there are other techniques published that could evade such problem by modifying common type diamond to be suitable for the above objectives: high speed-high precision machining works.

Patent literature 1, for example, shows a technique in which diamond particles are heated to 1000° C or more in a non-oxidizing atmosphere, in order to create a non-diamond layer on the diamond surface and, at the same time, generating internal microcracks with the particles.

It is commonly understood that the non-diamond layer on the particle surface serves as lubricant or shock absorber for the work, and also as reducer for grit edge protrusion heights. The internal cracks on the other hand effectively induce minute fractures around the edges, thus preventing the occurrence of deep grit scratches and also promoting regenerating of fresh edges.

On the other hand patent literature 2 shows a technique in which diamond particles are heated in contact with a group VIII metal of the periodic table and etched thereby, so that the particles have a modified surface full of irregularities. In this technique the metal promotes the graphitization of the diamond in contact at the elevated temperatures; the diamond particle, after the removal by oxidization of the diamond-converted graphite have a decrease particle mass, an enlarged surface irregularities and increased specific surface areas. Examples are also shown such that the diamond particles are heated either, as coated with nickel, between 825° and 1000° C or, as compacted in mix with iron powder, to 700° C.

### Citation List

### Patent literature

Patent literature 1: JP Patent 3411239
Patent Literature 2: JP patent 5518871

### Non-patent Literature

Non-patent literature 1: "Diamond Tools"; Nikkei Gijutsu Tosho (1987)

### Summary of Invention

### Technical Problem

The principal object of the present invention is to provide grits, and also method for the production, that exhibit in combination the advantages of both of the above described prior arts: internal cracks within the diamond particle and surface irregularities, with or without a layer of non-diamond carbon on the surface.

### Solution to Problem

According to the invention there are provided diamond grits with enhanced friability, consisting of diamond particles synthesized by a static ultrahigh pressure-high temperature process, comprising both microcracks generated within the particles due to the effect of heating, and surface irregularities formed on the particles by oxidizing etching at elevated temperatures.

The diamond grits of the invention is essentially and effectively produced by providing a starting volume of diamond particles, from a synthesizing process in a static ultrahigh pressure-high temperature process, subjecting said diamond particles to a heating process in intimate contact with an oxidizing etchant at a treatment temperature of 800° C or higher, generating thus microcracks within the diamond particles and also causing to corrode the particle surface thus forming increased surface irregularities, and recovering the treated diamond particles.

### Advantageous Effects of Invention

The present invention provides abrasive grits that achieve a sustained grinding and polishing performance in terms of high cutting rate or stock removal based on the apparent particle sizes, and at the same time acceptable worked surface quality.

In particular, each of the surface irregularities generated on the surface of grits cut as effective edges and also, when overloaded, fracture along internal cracks to form fresh edges anew to allow a sustained performance.

### Brief Description of Drawings

Figure 1 shows a SEM image showing an example of surface view of diamond grits prepared according to the invention (Example 3);
Figure 2 shows a SEM image showing another example of surface view of diamond grits prepared according to the invention (Example 3);
Figure 3 shows a SEM image showing still another example of surface view of diamond grits prepared according to the invention (Example 3);
Figure 4 shows a SEM image showing still another example of surface view of diamond grits prepared according to the invention (Example 3);

### Description of Embodiments

The present invention involves mainly diamond particle products from a static ultrahigh-pressure high temperature process, and also size-sorted powders of a size ranging from 0.1 to 300 µm by way of crushing the particles.

As a preferable technique for achieving, at the same time, both internal cracks within the particles and surface irregularities on the particles, the diamond is heated and held at 1000° C or higher in an oxidizing gas environment or in contact with solid oxidizer.

While the microcracks within the particles are hard to observe firsthand with the naked eye, the occurrence of cracks can be perceived when the diamond particles, as heat treated by the invention, show either some black spots of non-diamond carbon within or darkening due to gatherings of minute black spots.

Synthetic diamond particles often contain trace of catalyst metal used for the synthesis process, either as inclusion in the crystal or as foreign atoms within the diamond crystal lattice. So it is interpreted that the cracks originate and grow as a result of the partly conversion of diamond to graphite, which involves volume increase and causes a structural deformation, which in turn serves as a cracking origin.

While such crack formation may cause a certain decrease in the physical strength of the particle, it can be used as an effective technique for the modification of diamond particle properties so as to suit for the use as a resin bond tool. It is for this reason: diamond for such use are demanded that grits should yield, during the machining of rather tough materials like cemented tungsten carbide alloy in particular, micro-fracturing and chipping should occur around working edges on occasional overloading, in order to generate fresh edges anew, so that a sustained good performance can be achieved.

Such fracturing features can be furnished in advance to diamond particles by providing structural distortion or internal microcracks within the particles. The cracks can be formed by heating diamond particles in a non-oxidizing atmosphere to 1000° C or higher, preferably between 1200° and 1300° C. The temperature and holding time can be selected just to meet the particular target strength. Treatment parameters can be considered as proper such that the target strength decrease be 10% or more with the reproducibility considered.

While there are several evaluation techniques available for the particle strength, for the purpose of this invention we use the friability or fracturing strength. Here size-sorted sample particles are dosed to a determined mass and placed in a capsule, to which steel balls are added. The set is subjected to a specified swing motion for a specified time. The sample is recovered and weighed to determine the portion of size decreased fraction by the test fracturing relative to the whole. The relative mass of fractured portion is indicated as the strength. For test procedure details, see the non-patent literature 1 at page 238.

Also the strength may be indicated instead as toughness index (T.I.), in ratio of the mass of the tougher fraction that remains unfractured on the sieve, relative to the whole mass tested.

For example, a mesh grade resin bond diamond product (Tomei Diamond powder IRV-3, #170/200) was heat treated for enhancing the fracture properties; after heating at 1100° and 1300° C for 2 hours in nitrogen atmosphere, the friability increased from the value of 54.4 before the treatment to 65.7 and to 70.7, respectively, which correspond to 20 and 30 %.

For the purpose of the invention to generate surface irregularities on diamond particles, these techniques are available: gas etching that uses water vapor, carbon dioxide and oxygen gases and solid etching in contact on a solid oxidizer.

Such gases are introduced either singly, in combination with each other, or in dilution with inert gas such as nitrogen, over to come in contact with diamond particles, which are held at a temperature of 800° C or higher; here temperatures between 1000° and 1200° C are particularly effective for controlling the oxidization process.

For the solid oxidizer available are such metal oxides and/or metal hydroxides and oxide of iron group metals and alkaline-earth metals, in particular; iron oxide, calcium oxide and magnesium oxides are a few of examples that are easy to handle.

For rather coarse mesh grade particles such dry process is available that the particles are coated evenly with fine powder of oxide, which then are compacted and heat treated. Here fine powder of carbonate powder also can be used as oxidizer.

For the treatment of micron grade diamond particles wet mode processes are used to evenly coat the diamond with the fine oxidizer powder. For example diamond particle surface is wetted in advance with acidic metallic salt solution, to which alkali is added in order to deposit metal hydroxide. The diamond particles are dried by heating in the air to 400° C (i.e. below the oxidization onset temperature) for the heat treatment.

The etching process is basically conducted by heating diamond particles in a non-oxidizing atmosphere at 800° C or higher. A higher temperature of or over 1000° C is preferable and, in particular, within a range 1100° to 1300° C. The diamond particles from the heat treatment are removed of metallic content by dissolving in dilute hydrochloric acid, washed with water and dried for recovery.

Pits as deep as 1 µm or more can be formed on the diamond by etching with oxide. This process can yield diamond particles equipped with a lot of micro-edges that produce fine worked surface while allowing high machining rates, prospectively, when applied in the grinding, polishing etc. processes for the production of semiconductor materials.

The diamond particles of the invention can be used in a tool, in which they are held in a bond material which in turn is joined to the tool base. In such uses the particles can yield an improved grit retention or holding to the bond, a helpful feature for achieving an improved tool life.

The diamond particle surface as etched by the invention can be evaluated indirectly in terms of bulk density for mesh grades, as the surface etching of the invention changes the particle to bulkier shape with enhanced irregularities. Process conditions should be selected so as to cause a target decrease in bulk density of or greater than 10% relative to the value before the treatment.

The B.E.T. surface analysis is suitable for the relative evaluation of the specific surface area for the particles of 10 µm or smaller. Since micron grade diamond particles, produced basically via crushing and size sorting, have irregular shapes, they are handled for the sake of convenience with each lot's size distribution D₅₀ median or average as the representative size value.

However the value indicated as specific surface area consists of the sum that includes the outer surfaces of particles, the inner wall surface of pits extending from the particle surface and the inner surface of the voids open to the surface, so it is significantly greater than that of the assumed reference sphere with the diameter of the nominal D₅₀ size particle. Thus, for example, it is common that a 10 µm commercial micron size diamond powder shows a value 3 times as large.

As for the grit particles of the invention the etching process produces a lot of minute irregularities on an irregular shaped particle surface, so the specific surface area exhibits a further increased value; a remarkable improvement is noticeable in machining performance in micro-fracturing and worked surface quality, at a relative specific surface area to the reference sphere of 3.5 times or more.

Since the degree of particle etching depends upon such parameters as the nature and concentration of the etchant employed, heating temperature and holding time, etc., process conditions may be practically selected for the relative specific surface area of 3.5 or more as a target.

For example a 5.7 µm average size diamond powder (specific surface area: 0.849 m²/g) was heated and deposited with iron oxide to 10 % on metal mass basis. The powder was divided into two samples, one was subjected, while the other not, to further heating at 800° C for 2 hours in hydrogen gas atmosphere, in order to reduce the oxide to iron metal. The both samples were then heated at 1200° C for 2 hours in agon. After the heat treatment the specific surface area was evaluated.

The result showed value variation for each sample: 1.58 and 1.08 m²/g for the one with iron oxide and iron metal, respectively, a consistent observation with the comparative views of the particles showing a greater etching effect by the oxide deposit.

It is added that since the sphere of 5.7 µm diameter has a specific surface area of 0.297m²/g, the value 0.849 observed for the specific surface area of the starting diamond powder is 2.9 times as large, while the values 1.58 and 1.08 m²/g for the samples with the deposits of iron oxide and iron metal were 5.3 and 3.6 times, respectively, as large as the reference sphere.

Several methods are available, as a combination of some techniques, for the generation of the three features of the grits of the invention, the internal microcracks within the diamond particle, particle surface irregularities, and deposition of non-diamond carbon layer on the surface, in particular, for example:
(1) single step procedure of etching by contacting with solid oxidizing etchant or in gas etchant, at 1200° C or higher;
(2) two step procedure of heating in contact with solid oxidizing etchant or in gas etchant at a temperature from 800° to 1100° C, and then heating in an inert gas atmosphere at 1200° C or higher, in order to generate particle internal cracks and surface non-diamond carbon layer; and
(3) Heating to 1200° C or higher in order to generate particle internal cracks and surface non-diamond carbon layer and, as necessary, removing partly or entirely the carbon and further heating for etching at 1100° C or less.

For the partly removal of the carbon layer formed on the particle surface, such wet oxidizing process is suitable that the particles are heated in sulfuric-nitric mixed acid solution at 100° to 150° C and, preferably, between 120° and 140° C. The process is also effective for attaching hydrophilic group to the particle surface.

The surface carbon layer on the diamond particle is evaluated by an oxidization process wherein the diamond is heated at 250° or higher in sulfuric-nitric mixed acid solution, and the mass loss is determined by quantitative analysis on the assumption that the observed loss corresponds to the removed carbon. In the process such a solid oxidizer may be used in combination together, as KNO₃, CrO₃ and KMnO₄.

Techniques are also available for the estimation of the amount of non-diamond carbon, such as comparison of the peak heights for diamond and graphite on the observed X-ray diffraction curve, and comparison of the peak heights around 1330 cm⁻¹, belonging to diamond and around 1500 to 1600 cm⁻¹ attributed to amorphous carbon on the Raman spectroscopy curve.

Or, alternatively it can be estimated by means of the electrical resistance of a powder compact pressed to 10 MPa. A handy method is such that sample diamond powder is filled in an alumina tubular holder, which is pinched with a copper electrode piece at each end. The sample set is mounted on a press, a press load of 10 MPa or so is applied over the electrodes, and the electrical resistance is measured. It is known that the resistivity values are on the order of 10⁻³, 10⁴, and 10⁶ Ω.m, respectively, for a carbon content of 5 %, 0.3 % and 0.2 %.

For the carbon content in/on the diamond particle a range of 1 to 5 mass% is considered adequate: a content less than 0.5 % does not show a good lubrication effect, while over 10 % carbon content, excessively decreases the edge protrusion height and thus polishing efficiency. However there may be some cases where the occurrence of free carbon should be avoided; the carbon left over can be decreased to 0.2 % or less by reinforcing the carbon removal in the post treatment.

### Examples

### Example 1

### § Friability improvement of resin bond grade diamond particles

A commercial lot of resin bond diamond (Tomei Diamond Co. powder IRV3, #170/200, friability: 54.4; bulk density: 1.62g/cm³) was used as the starting material and treated as below for the purpose of improving the friability.

### [1] Oxidization with CO₂

20 grams of the starting material was dosed, placed in a ceramic boat and heated in a tubular furnace at 980° C for 12 hours, while flowing carbon dioxide gas over at a rate of 40 mL per minute. The diamond particles recovered from the furnace exhibited a friability of 65.8 and a bulk density of 1.37g/cm³; cracks were observed within and surface corrosion on the particles. There were observed a friability increase of 21 % and a bulk density decrease of 18%due to the roughened surface.

### [2] Oxidization with H₂O

20 grams of the above said starting material was placed in a ceramic boat and heated in a tubular furnace at 900° C for 6 hours, while flowing water vapor over at 20 mL per minute. The diamond particles recovered from the furnace exhibited a friability of 63.4 and a bulk density of 1.42g/cm³.

### [3] Oxidization with iron oxide (Fe₂O₃)

1 gram of iron pieces was dissolved in a hydrochloric acid, then to which added was 20g of the starting diamond material. The loaded acid solution was neutralized with ammoniac solution by dripping to cause the deposition of iron hydroxide. The whole was dried at about 400° C and kept for use as specimen.

The specimen was placed in a ceramic crucible; it was then heated in nitrogen atmosphere and held at 950° for 5 hours. The recovered diamond exhibited a friability of 68.1 and bulk density of 1.44g/cm³.

### Example 2

### § Improvement of metal bond grade diamond particles

A commercial metal bond grade diamond particles (Tomei Diamond Co. powder IMS, #325/400, friability: 20.0) was used as the starting material and processed as below for the purpose of friability improvement.

A volume of the starting diamond material was placed in an alumina crucible, and heated at 1300° C for 6 hours in nitrogen atmosphere. After the treatment the diamond particle sample was recovered, which showed a grayish appearance with a thin graphite layer formed on the surface. The friability was evaluated to be 35.0.

Two 20 gram samples were taken out of the treated diamond; a first sample was treated at 1000° C for 2 hours in CO₂ atmosphere; thus a friability of 54.0 was achieved. A second sample was treated at 1000° C for 2 hours in H₂O vapor, and a friability of 58.6 was thus achieved.

### Example 3

### § Improvement of micron size grade diamond particles

### [1] Surface oxidization with solid etchant

For the starting diamond material used was a commercial product of Tomei Diamond Co. micron size diamond powder (IRM 5-10, D₅₀ size (median): 5.730 µm, specific surface area: 0.849 m²/g)

A wet process was employed for securing a regular deposition of fine powder of oxide etchant on the diamond particles: diamond particles were first wetted with acidic solution of metallic salt (iron chloride, magnesium chloride, etc.) to which alkali was added in order to cause the deposition of metal hydroxide. Then the whole was dried and mold-formed into sample pellets.

Each sample was placed in an alumina crucible and treated by heating in an inert gas atmosphere to either 1300° or 1200° C for 2 hours. The samples, as recovered, were removed of metallic content by dissolving in dilute hydrochloric acid, washed with water and dried to collect diamond particles. They were further removed by oxidization of carbon layer having formed on the particle surface with sulfuric-nitric mixed acid. The particles thus cleaned were observed on the surface, and evaluated in particle size and specific surface area.

### [2] gas etching

10 gram samples of starting diamond particles were placed in respective ceramic boats, which were heated in a tubular furnace to 1000° C or higher for 2 hours while flowing over either carbon dioxide gas at 20 mL per minute or mix of water vapor and nitrogen gas at 20 mL per minute.

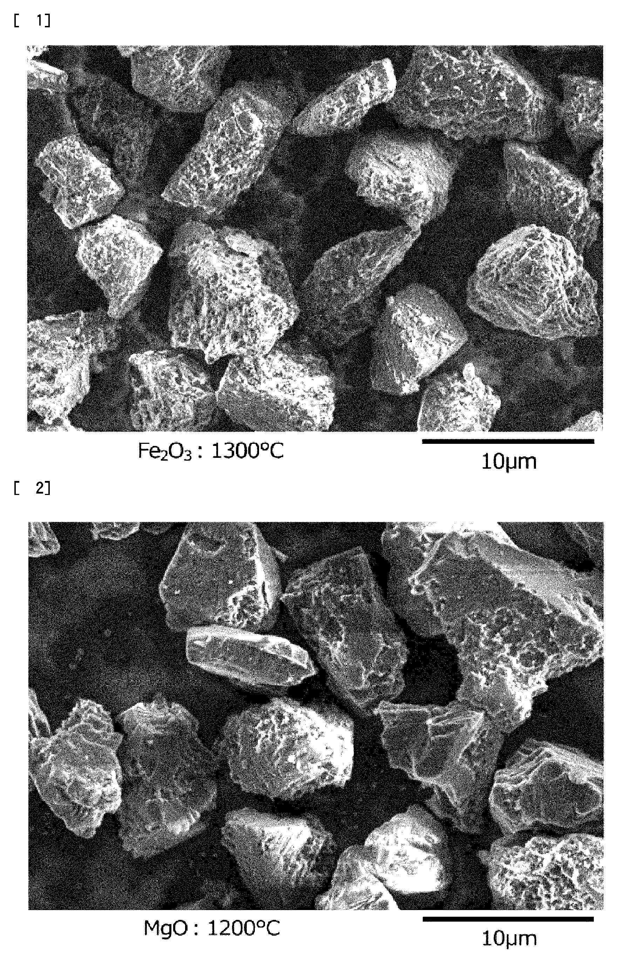

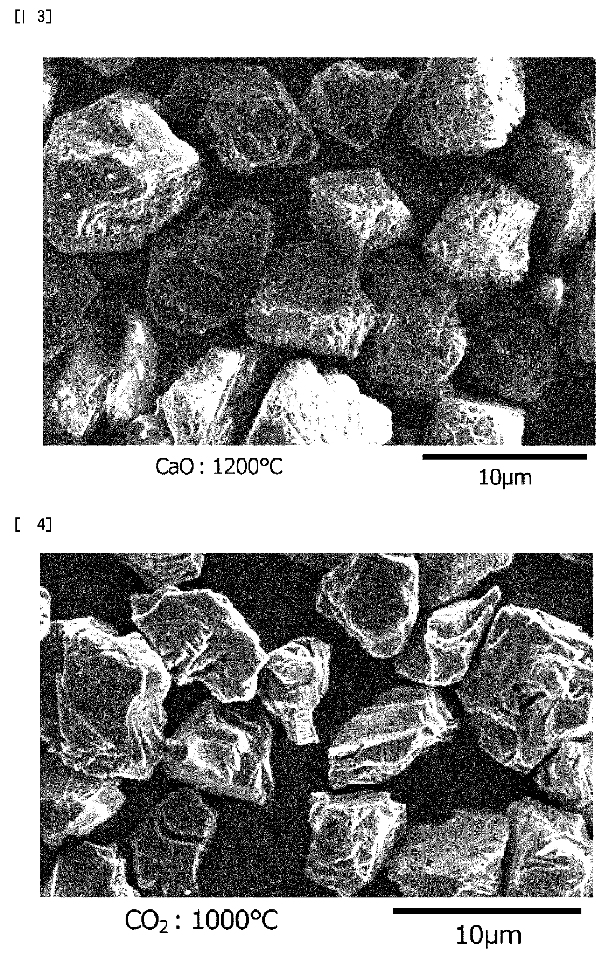

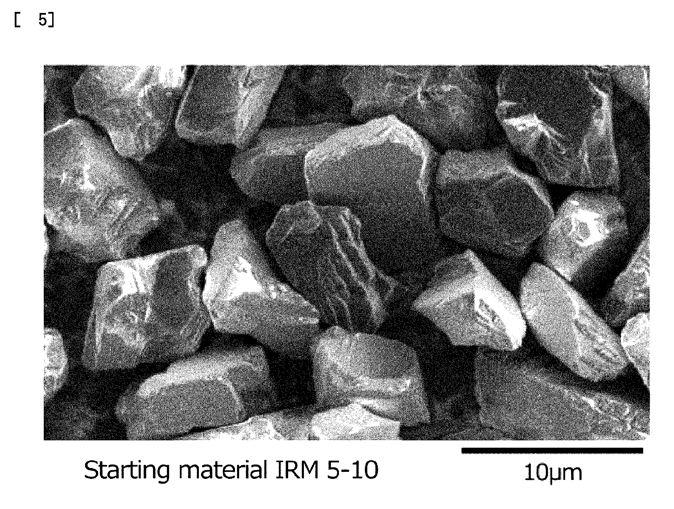

The results of each example runs were listed together in the table below. The view of etched particles are shown in Figures 1 to 5, along with the starting diamond particles.

**[Table 1]**

| Run No. | Etchant | | Process param. | | Product characteristics | | | | | |
|---|---|---|---|---|---|---|---|---|---|---|
| | material | conc. (metallic ingredient base) | temperature (°C) | holding time (h) | D₅₀ median size (µm) | specific surface area (m²/g) | ratio to refer. sphere | color | surface C (%) | Figure (SEM) No. |
| 1 | Fe₂O₃ | 10% | 1300 | 2 | 5.431 | 2.200 | 7.07 | black | 7.7 | 2 |
| 2 | | | 1200 | 2 | 5.620 | 1.579 | 5.23 | black | 4.8 | |
| 3 | Fe₂O₃ | 5% | 1300 | 2 | 5.653 | 1.167 | 3.88 | black | 7.5 | |
| 4 | MgO | | 1300 | 2 | 5.747 | 1.206 | 4.07 | dark gray | 4.1 | |
| 5 | | 10% | 1200 | 2 | 5.607 | 1.159 | 3.83 | gray | 3.9 | 3 |
| 6 | CaO | 10% | 1200 | 2 | 5.854 | 1.057 | 3.64 | gray | 3.5 | 4 |
| | | | | | | | | | | |
| 7 | CO₂ | 200 | 1100 | 2 | 5.635 | 2.288 | 7.58 | gray | 1.5 | |
| 8 | | mL/min. | 1000 | 2 | 5.731 | 1.657 | 5.58 | light gray | 1.0 | 5 |
| 9 | H₂O | 20 | 1100 | 2 | 5.912 | 1.579 | 5.48 | light gray | 1.0 | |
| 10 | | mL/min. | 1000 | 2 | 5.906 | 1.068 | 3.71 | light yellow | 0.3 | |
| | | | | | | | | | | |
| 0 | starting material | IRM 5-10 | | | 5.730 | 0.849 | 2.86 | light yellow | | 1 |

The diamond particles of the invention can be used as an effective abrasive grits that enables to achieve both increased stock removal rate and improved worked surface quality at the same time in various sectors of machining.

## Claims

1. Easy-fracturing diamond grits with enhanced friability, consisting of diamond particles synthesized by a static ultrahigh pressure-high temperature process, comprising both microcracks generated within the particles due to the effect of heating, and surface irregularities generated on the particles by oxidizing etching at elevated temperatures.

2. The grits as claimed in claim 1, further comprising on the particle surface a layer of non-diamond carbon converted from the base diamond particle.

3. The grits as claimed in claim 2, in which the non-diamond carbon content is 0.2 % or more relative to the combined mass of diamond and non-diamond.

4. The grits as claimed in claim 2 or 3, in which the non-diamond carbon content ranges from 0.5 and 10 % relative to the combined mass of diamond and non-diamond.

5. The grits as claimed in each of claims 1 to 4, in which said diamond particles by nature is a size-sorted diamond powder product with a D₅₀ average size of 150 µm or less.

6. The grits as claimed in each of claims 1 to 5, comprising a B.E.T. specific surface area 3.5 times or more as large as the surface of assumed (reference) spere.

7. The grits as claimed in each of claims 1 to 6, in which said particles have hydrophilic surface.

8. The grits as claimed in each of claims 1 to 7, in which said particles exhibit a controlled electrical resistance that is based on the non-diamond carbon phase.

9. The grits as claimed in each of claims 1 to 8, in which said particles as a volume compacted at 10 MPa exhibit an electrical resistivity of or greater than 10⁻³Ω/m.

10. The grits as claimed in each of claims 1 to 9, in which said particles as a volume compacted at 10 MPa exhibit an electrical resistivity less than 10⁶Ω/m.

11. A method for producing the grits as claimed in each of claims 1 to 10, comprising:
providing a starting volume of diamond particles, from a synthesizing process under a static ultrahigh pressure-high temperature process,
subjecting said diamond particles to a heating process in intimate contact with an oxidizing etchant at a treatment temperature of 800° C or higher,
generating thus microcracks within the diamond particles and also causing to corrode the particle surface thus forming increased surface irregularities, and
recovering the treated diamond particles.

12. The method as claimed in claim 11, in which said heating process is carried out in an environment controlled in temperature and atmospheric gas composition.

13. The method as claimed in claim 11 or 12, in which said atmospheric gas comprises one selected from water (H₂O), carbon dioxide (CO₂) and oxygen (O₂).

14. The method as claimed in each of claim 11 to 13, in which said heating is carried out in an atmospheric gas that comprises an oxidizing etchant gas mixed with a non-oxidizing gas.

15. The method as claimed in each of claim 11, in which said etchant is in solid form.

16. The method as claimed in each of claim 11 or 15, in which said etchant is in particulate form, and heated in a mixture with the diamond particles.

17. The method as claimed in each of claim 11, 15 and 16, in which said etchant is one selected from the carbon-reducible oxides, hydroxides and carbonates of metal.

18. The method as claimed in each of claim 11 to 17, in which said treatment temperature is higher than 800° but lower than 1500° C.

19. The method as claimed in each of claim 11 to 18, in which said treatment temperature is between 1000° and 1400° C.

20. The method as claimed in each of claim 11 to 19, in which microcracks are generated within the diamond particles and at the same time the particle surface is corroded to cause enhanced surface irregularities on the particles, recovering thus treated diamond particles.

21. The method as claimed in each of claim 11 to 20, in which a surface layer of the starting diamond particle base is converted to non-diamond by said heating process.

22. The method as claimed in each of claim 11 to 21, in which said starting diamond particles have a mesh grade particle size and as treated exhibit a fracture strength decreased 10% or more relative to the starting diamond particles.

23. The method as claimed in each of claim 11 to 22, in which said starting diamond particles have a particle size less than 10µm and as treated exhibit a specific surface area increased by 10 % or more relative to the starting diamond particles.

24. A (working) tool that comprises (a volume of) said diamond particles as claimed in each of claim 1 to 10.

25. A polishing tool that comprises (a volume of) said diamond particles as claimed in each of claim 1 to 10.

26. A grinding tool that comprises (a volume of) said diamond particles as claimed in each of claim 1 to 10.
